# EUROPEAN PATENT APPLICATION

(11) **EP 4 769 597 A1**
(43) Date of publication of application: **01.07.2026**
(21) Application number: 25745280.5
(22) Date of filing: 21.01.2025
(51) Int. Cl.: H01M 10/04, G06T 7/30, G06V 10/764, G06V 10/776, G06K 19/06

(54) **SECONDARY BATTERY MANUFACTURING SYSTEM**

(30) Priority: 25.01.2024 KR 20240011512
(71) Applicant: LG Energy Solution, Ltd., Seoul 07335 (KR)
(72) Inventor: LEE, Sung Gyu, Daejeon 34122 (KR); LEE, Seok Hun, Daejeon 34122 (KR); JUNG, Tae Kwang, Daejeon 34122 (KR); BOO, Jang Hun, Daejeon 34122 (KR); PARK, Kyoung Chan, Daejeon 34122 (KR); KIM, Min Su, Daejeon 34122 (KR); LIM, Sang Hyun, Daejeon 34122 (KR); CHO, Hyeon Woo, Daejeon 34122 (KR); LEE, Sang Ik, Daejeon 34122 (KR)
(74) Representative: BCKIP Part mbB
(86) International application number: PCT/KR2025/099104
(87) International publication number: WO 2025/159615

(57) **Abstract**

According to exemplary embodiments, a secondary battery manufacturing system is provided. The system includes: a data matrix reader configured to read a data matrix of an electrode semi-finished product, configured to generate an unrecognized image comprising the data matrix that fails to be read, and configured to match the unrecognized image with a virtual ID; a first server configured to store the unrecognized images transmitted from the data matrix reader; and a processor configured to determine features that interfere with the reading of the data matrix to generate classification data based on the unrecognized image transmitted from the first server.

## Description

### [Technical Field]

The present disclosure relates to a secondary battery manufacturing system. This application claims the benefit of Korean Patent Application No.10-2024-0011512, filed on Jan. 25, 2024, the disclosure of which is incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, the primary use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

Secondary batteries are manufactured through an electrode process, assembly process, and activation process. In order to improve the yield and reliability of the secondary battery manufacturing process, it is important to ensure traceability of the manufacturing process. Therefore, various studies have been conducted to ensure the traceability of the secondary battery manufacturing process.

### [Summary]

### [Technical Problem]

The problem addressed by the technical ideas of the present disclosure is to provide a secondary battery manufacturing system with increased traceability.

### [Technical Solution]

According to the exemplary embodiments of the present invention for solving the above-mentioned problems, a secondary battery manufacturing system is provided. The system includes: a data matrix reader configured to read a data matrix of an electrode semi-finished product, configured to generate an unrecognized image comprising the data matrix that fails to be read, and configured to match the unrecognized image with a virtual ID; a first server configured to store the unrecognized images transmitted from the data matrix reader; and a processor configured to determine features that interfere with the reading of the data matrix to generate classification data based on the unrecognized image transmitted from the first server.

The title of the unrecognized image includes the virtual ID.

The first server is a Network Attached Storage.

The first server is configured to further store an image associated with the virtual ID, which is an image of the electrode semi-finished product matched to the virtual ID.

The title of the image associated with the virtual ID includes the virtual ID.

The processor is configured to retrieve the virtual ID-associated image of the electrode semi-finished product to which it corresponds based on the virtual ID matched to the unrecognized image.

The processor is configured to determine features based on the virtual ID-associated image.

The processor is configured to generate identity verification data indicative of identity of the classification data.

The identity verification data is generated by comparing features of the unrecognized image with features of the virtual ID-associated image of the electrode semi-finished product corresponding to the unrecognized image.

The secondary battery manufacturing system further includes a second server configured to store the classification data.

The data matrix reader is configured to read a cell ID of the electrode semi-finished product from the data matrix, and the second server is configured to store cell ID data including the cell ID and the virtual ID.

The processor is configured to transmit the identity verification data to the second server.

### [Advantageous Effects]

A secondary battery manufacturing system according to exemplary embodiments of the present disclosure may be configured to generate classification data indicative of features that cause failures in the reading of a data matrix, and to generate identity verification data validating the classification data. Accordingly, monitoring of cell traceability may be provided, and further high precision cell tracking may be provided.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a block diagram illustrating a secondary battery manufacturing system according to exemplary embodiments.
FIGS. 2 through 5 illustrate examples of an electrode semi-finished product according to exemplary embodiments.
FIGS. 6 through 9 illustrate examples of an unrecognized data matrix image according to exemplary embodiments.
FIG. 10 is a flowchart to illustrate a secondary battery manufacturing method according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best explain his disclosure.

Accordingly, it is to be understood that the embodiments described herein and the configurations shown in the drawings are only the most preferred embodiments of the disclosure and do not represent all of the technical ideas of the disclosure, and that there may be various equivalents and modifications that may be substituted for them at the time of filing the present application.

Furthermore, in describing the disclosure, specific descriptions of relevant disclosed configurations or features are omitted where it is believed that such detailed description would obscure the essence of the disclosure.

Because the embodiments of the present disclosure are provided to more fully illustrate the disclosure to those of ordinary skill in the art, the shapes and sizes of the components in the drawings may be exaggerated, omitted, or shown schematically for clarity. Accordingly, the size or proportion of each component is not necessarily indicative of its actual size or proportion.

### (First embodiment)

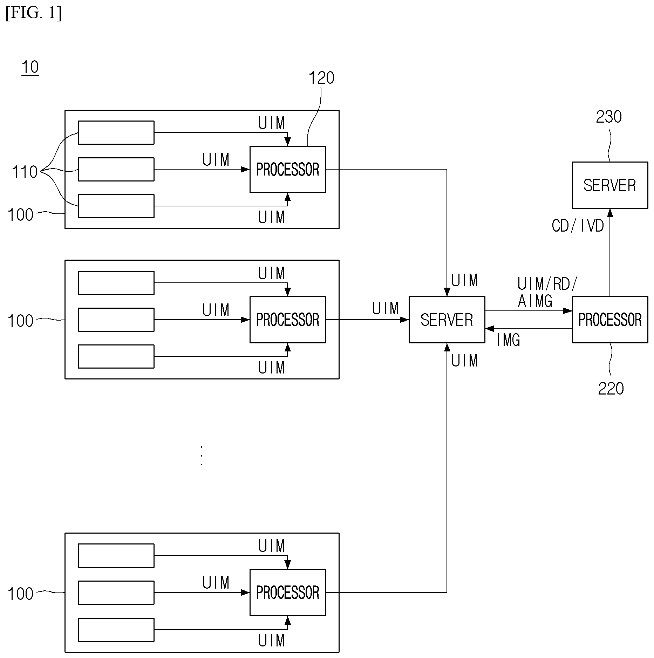

FIG. 1 is a block diagram illustrating a secondary battery manufacturing system 10 according to exemplary embodiments.

Referring to FIG. 1, the secondary battery manufacturing system 10 may include a plurality of secondary battery manufacturing facilities 100, a server 210, a processor 220, and a server 230.

The secondary battery manufacturing facilities 100 may be configured to perform, for example, an assembly process of a secondary battery. The secondary battery manufacturing facilities 100 may include a plurality of data matrix readers 110, inspectors 120, processors 150, controllers 140, and processors 150.

According to exemplary embodiments, each of the secondary battery manufacturing facilities 100 may be configured to process electrode semi-finished products. According to exemplary embodiments, the data matrix reader 110 can read a cell ID (CID) from the electrode semi-finished product, thereby matching the electrode semi-finished product to the process performed on the electrode semi-finished product, thereby increasing traceability of the electrode semi-finished product.

Each of the secondary battery manufacturing facilities 100 may include a transfer device for transferring electrode semi-finished products and a processing mechanism for processing the electrode semi-finished products. According to exemplary embodiments, the transfer device may be a linear motion system (LMS). The transfer device may include a conveyor device or a roll-to-roll transfer device.

The processing mechanism may be configured to process electrode semi-finished products. The secondary battery manufacturing facilities 100 may be configured to perform different processes. For example, some of the secondary battery manufacturing facilities 100 may be configured to perform a notching process, other of the secondary battery manufacturing facilities 100 may be configured to perform a lamination process, other of the secondary battery manufacturing facilities 100 may be configured to perform a stacking process, other of the secondary cell manufacturing facilities 100 may be configured to perform a folding process, and other of the secondary battery manufacturing facilities 100 may be configured to perform a packaging process.

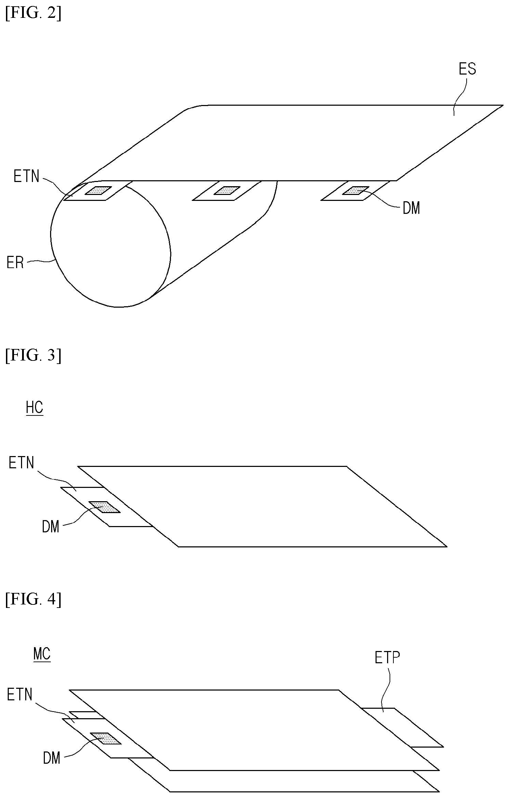

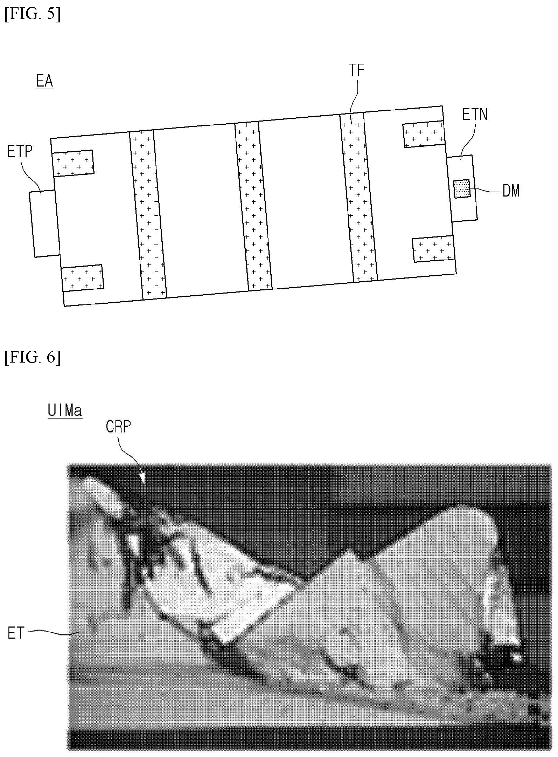

FIGS. 2 through 5 are drawings illustrating electrode semi-finished products according to exemplary embodiments, which may be an electrode sheet (ES) in FIG. 2, a half cell (HC) in FIG. 3, a mono cell (MC) in FIG. 4, or an electrode assembly (EA) in FIG. 5. Electrode semi-finished products may include electrodes as intermediate articles to provide a finished battery cell.

Referring to FIG. 3, a notching process may be performed on an electrode sheet ES that has been extruded from an electrode roll ER by a rewinder. In the notching process, an electrode tab (ETN) may be formed on the non-coated part of the electrode sheet ES. In the notching process, a V-shaped groove may be further formed in the electrode sheet ES. A data matrix DM may be formed on the electrode tab ETN. The data matrix DM may be formed by methods such as inkjet printing and laser printing. According to exemplary embodiments, the electrode sheet ES on which the data matrix DM is formed may include, but is not limited to, a negative electrode. The electrode sheet ES may also include a positive electrode. After the electrode notching process, the electrode sheet ES may be individualized into unit electrodes including electrode tabs ETNs. The positive electrode may include a positive electrode current collector and a positive electrode active material. The negative electrode may include a negative electrode current collector and a negative electrode active material.

The thickness of the positive electrode current collector may be in the range from about 3 µm to about 500 µm. The positive electrode current collector may have a high conductivity and may not cause chemical changes in the final manufactured secondary battery. The positive electrode current collector may include, for example, stainless steel, aluminum, nickel, titanium, calcined carbon, and aluminum. The positive electrode current collector may also include stainless steel with a surface treated with carbon, nickel, titanium, silver, or the like. The surface of the positive electrode current collector may include a micro-irregular structure to increase adhesion of the active material. The positive electrode current collector may have the shape of a film, sheet, foil, net, porous, foam, nonwoven, or the like.

The thickness of the negative electrode current collector may be in the range of about 3 µm to about 500 µm. The negative electrode current collector may not cause chemical changes in the final manufactured secondary battery and may have a high conductivity. The negative electrode current collector may include copper, stainless steel, aluminum, nickel, titanium, calcined carbon, and aluminum-cadmium alloys. The negative electrode current collector may also include stainless steel with a surface treated with carbon, nickel, titanium, silver, or the like. The surface of the negative electrode current collector may include a micro-irregular structure to increase adhesion of the active material. The negative electrode current collector may have the shape of a film, sheet, foil, net, porous, foam, nonwoven, or the like.

A positive electrode active material is a material that can cause an electrochemical reaction. The positive electrode active material may be a lithium transition metal oxide. The positive electrode active material may be, for example, a layered compound such as lithium cobalt oxide (LiCoO₂)and lithium nickel oxide (LiNiO₂) substituted with one or more transition metals, a lithium manganese oxide substituted with one or more transition metals, a lithium nickel-based oxide represented by the formula LiNi_{1-y}M_{y}O₂ (where M is any one element among Co, Mn, Al, Cu, Fe, Mg, B, Cr, Zn, and Ga, and 0.01≤y≤0.7), a lithium nickel cobalt manganese complex oxide represented by Li_{1+z}Ni_{b}Mn_{c}Co_{1-(b+c+d)}M_{d}O₍₂₋ₑ₎Aₑ such as Li_{1+z}Ni_{1/3}Co_{1/3}Mn_{1/3}O₂, Li_{1+zN}i_{0.4}Mn_{0.4}Co_{0.2}O₂ (where -0.5≤z≤0.5, 0.1≤b≤0.8, 0.1≤c≤0.8, 0≤d≤0.2, 0≤e≤0.2, b+c+d<1 , M is any one of Al, Mg, Cr, Ti, Si, and Y, and A is any one of F, P, and Cl), and an olivine-based lithium metal phosphate represented by the formula Li₁₊ₓM_{1-y}M'_{y}PO_{4-z}X_{z} (where M is a transition metal, more specifically any one of Fe, Mn, Co, and Ni, M' is any one of Al, Mg, and Ti, and X is any one of F, S, and N; -0.5≤x≤+0.5, 0≤y≤0.5, and 0≤z≤0.1).

A negative electrode active material may include carbon, e.g., anthracite, graphitized carbon, graphite-based carbon, etc. The negative electrode active material may include a metal complex oxide, such as, for example, LiₓFe₂O₃(0≤x≤1), LixWO₂(0≤x≤1), SnₓMe₁₋ₓMe'_{y}O_{z} (where Me is any one of Mn, Fe, Pb, and Ge, Me' is any one of Al, B, P, Si, group 1, 2, and 3 elements of the periodic table, and halogens, and 0<x≤1, 1≤y≤3, and 1≤z≤8). The negative electrode active material may include, for example, a lithium metal, a lithium alloy, a silicon-based alloy, or a tin-based alloy. The negative electrode active material may include metal oxides, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, and the like. The negative electrode active material may include, for example, conductive polymers such as polyacetylene, Li-Co-Ni based materials, and the like.

Referring to FIGS. 3 and 4, in the lamination process, the individualized unit electrodes may be coupled to the separator. In the lamination process, the separator and the unit electrodes may be heat treated to increase the coupling force between the separator and the unit electrodes. The lamination process may provide a half cell (HC) or a mono cell (MC). The lamination process may also provide a bi-cell or the like. The half cell (HC) may include a separator and a positive electrode, or may include a separator and a negative electrode. The half cell (HC) may include an electrode tab (ETN) including a data matrix (DM). A mono cell (MC) may include a positive electrode, a first separator, a negative electrode, and a second separator stacked in sequence. The mono cell MC may include an electrode tab (ETN) including a data matrix (DM) and an electrode tab (ETP) of opposite polarity to the electrode tab (ETN). Unlike in FIG. 4, the data matrix DM may be formed on each of the electrode tabs ETP and ETN, or may be formed only on the electrode tab ETP.

Referring to FIGS. 3 through 5, in a stacking process, at least one of a half cell (HC), a mono cell (MC), and a bi-cell may be stacked repeatedly. An electrode assembly (EA) may be provided by the stacking process. The electrode assembly EA may include tape for fixing the positive electrodes and negative electrodes. The electrode assembly EA may include an electrode tab (ETN) including a data matrix (DM) and an electrode tab (ETP) of opposite polarity to the electrode tab (ETN). Unlike in FIG. 5, the data matrix DM may be formed on each of the electrode tabs, ETP and ETN, or may be formed only on the electrode tab ETP.

In the folding process, the half cells, mono cells, and bi-cells may be wound around the separator. The packaging process may include inserting the electrode assembly inside the case, filling the electrolyte, and sealing the case.

Referring again to FIG. 1, the data matrix reader 110 may be configured to take an image of the electrode semi-finished product including the data matrix and detect the data matrix in the image of the electrode semi-finished product to read a cell ID (CID). As a nonlimiting example, the data matrix may be a two-dimensional barcode. The data matrix may include information about a cell ID (CID) for identifying the electrode semi-finished product. That is, the cell ID (CID) may include a plurality of symbols for distinguishing and/or identifying the electrode semi-finished product. As used herein, symbols may collectively include signs, characters, and markings intended to indicate any meaning.

In this case, some of the images of the electrode semi-finished products may include features that interfere with the reading of the data matrix, and thus, the data matrix reader 110 may fail to read the data matrix.

FIGS. 6 through 9 show unrecognized images (UIMa, UIMb, UIMc, and UIMd) including features that interfere with the reading of the data matrix.

Referring to FIG. 6, the features of the unrecognized image (UIMa) may include dents (CRP) of the electrode tab (ET).

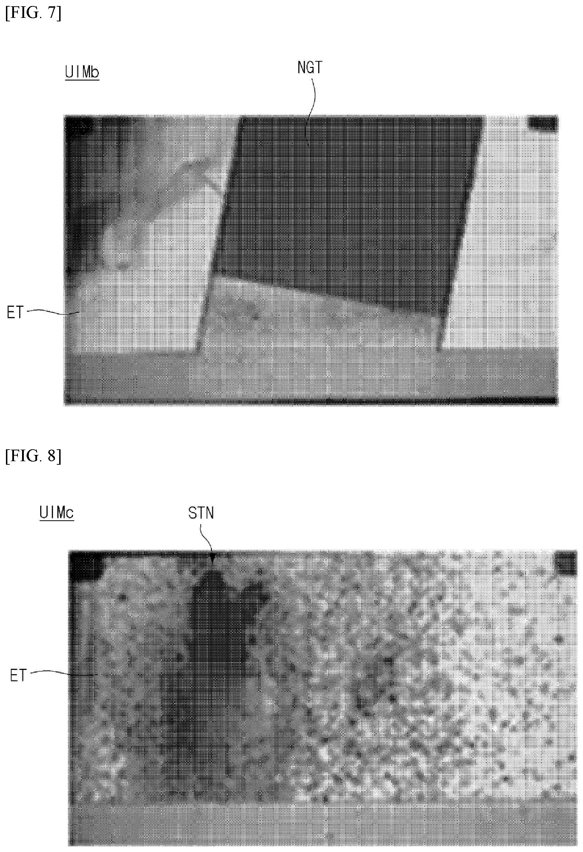

Referring to FIG. 7, a feature of the unrecognized image (UIMb) may be an NG tag (NGT) attached to the electrode tab (ET). The NG tag (NGT) may be attached to the electrode tab (ET) if inspection of the electrode semi-finished product indicates that the electrode semi-finished product contains a defect.

Referring to FIG. 8, the features of the unrecognized image (UIMc) may include contamination (STN) of the electrode tab (ET).

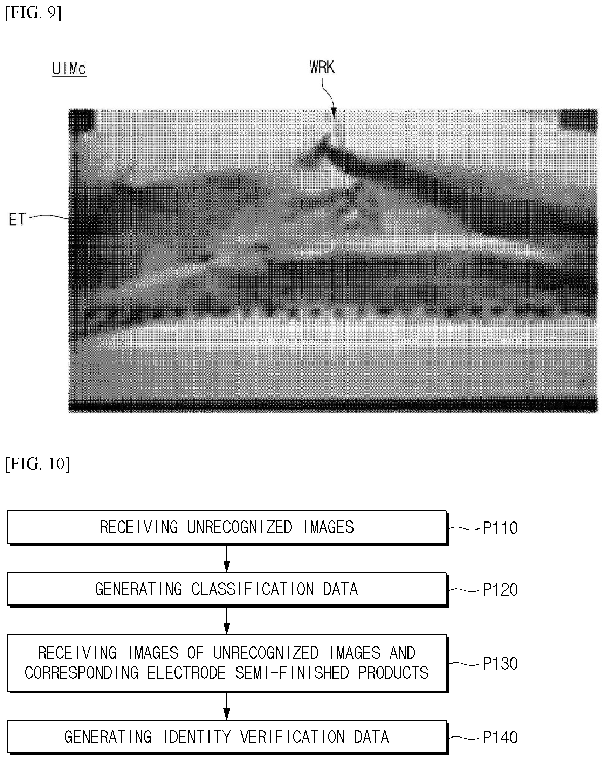

Referring to FIG. 9, the features of the unrecognized image (UIMd) may include contamination (WRK) of the electrode tab (ET).

Referring again to FIG. 1, the data matrix reader 110 may be configured to generate a virtual ID (VID) in the event of a failed read of the data matrix. The data matrix reader 110 may be configured to transmit signals indicative of a cell ID (CID) and a virtual ID (VID) to a controller 140. The virtual ID (VID) may have a different generation rule (or format) than the cell ID (CID), and the virtual ID (VID) may be easily distinguishable from the cell ID (CID). For example, the length of the virtual ID (VID) may be different from the cell ID (CID).

As described above, cell IDs (CIDs) provide traceability to the secondary battery assembly process, while virtual IDs (VIDs) may provide traceability to the failure of a data matrix to be read, as described later. By matching the VIDs to the data matrices that failed to be read and the corresponding electrode semi-finished products and data derived from the electrode semi-finished products, additional insight into the traceability of the secondary battery assembly process can be provided.

The data matrix reader 110 may be configured to send a corresponding image, the unrecognized image (UIM), to the processor if the data matrix reading fails. The unrecognized image UIM may be matched to a virtual ID (VID). Accordingly, the virtual ID (VID) may be used for storing and retrieving the unrecognized image (UIM). For example, the title of the unrecognized image UIM may include the virtual ID.

The inspector 120 may be configured to inspect the electrode semi-finished product. The inspector 120 may include, for example, a time delay and integration (TDI) camera, a complementary metal oxide semiconductor (CMOS) image sensor, and the like. The inspector 120 may also include a time of flight (TOF) sensor, and the like. The inspector 120 may also include an emitter and receiver configured to perform measurements using non-destructive signals, such as ultrasound, microwaves, terahertz waves, and infrared light. The inspector 120 may also include analog and/or digital sensors, such as biosensors, chemical sensors, composition sensors, current and/or power meters, air quality sensors, gas sensors, Hall effect sensors, brightness level sensors, light sensors, and the like. The inspector 120 may also include pressure sensors, temperature sensors, ultrasonic sensors, proximity sensors, door status sensors, motion tracking sensors, humidity sensors, visible light and infrared sensors, and cameras. An image of the electrode semi-finished product (IMG) may be generated by the inspector 120, and the inspector 120 may be configured to transmit the image of the electrode semi-finished product (IMG) to a processor 220.

The processor 130 may configure a vision machine in conjunction with the inspector 120, and the processor 130 may include algorithms for processing the image of the electrode semi-finished product (IMG). The algorithms of the processor 130 may include various algorithms for determining the quality of the electrode semi-finished product (i.e., whether it is a defective or good product) based on the IMG of the electrode semi-finished product, including artificial neural networks that are pre-trained or trained in real-time. For example, the processor 130 may be configured to determine defects in any of the following: fit, sealing, dimensions, shorts, NG markings, gaps, tab appearance, separator appearance, alignment between elements, and weld quality.

The processor 130 may match an image (IMG) of the electrode semi-finished product to a cell ID (CID) and a virtual ID (VID). Accordingly, a cell ID-associated image (CIMG) and a virtual ID-associated image (VIMG) of the electrode semi-finished product may be provided. The processor 130 may be configured to transmit the cell ID-associated image (CIMG) and the virtual ID-associated image (VIMG) of the electrode semi-finished product to a server 210.

More specifically, upon successful reading of the data matrix of electrode semi-finished products, the image (IMG) may be matched with a cell ID (CID), thereby providing a cell ID-associated image (CIMG). The cell ID may be used to retrieve and store the cell ID-associated image (CIMG). For example, the title of the cell ID-associated image may include the cell ID.

Similarly, in the case of an unsuccessful reading of the data matrix of electrode semi-finished products, the image IMG may be matched with a virtual ID VID, thereby providing a virtual ID-associated image (VIMG). The virtual ID (VID) may be used to retrieve and store the virtual ID-associated image (VIMG). For example, a title of a virtual ID-associated image VIMG may include a virtual ID VID.

The controller 140 may be configured to control elements of the secondary battery manufacturing facility 100. For example, the controller 140 may be configured to control the reading of cell IDs by the data matrix reader 110 and the inspection of electrode semi-finished products by the inspector 120, and the starting and stopping of processing mechanisms of the secondary battery manufacturing facility.

The controller 140 may be configured to receive signals indicative of cell IDs (CIDs) and virtual IDs (VIDs) from the data matrix reader 110. The controller 140 may be configured to transmit to elements that require matching using the cell IDs and virtual IDs, such as the processors 130, 150.

The controller 140 may be a programmable logic controller (PLC). A PLC is a special form of microprocessor-based controller that uses programmable memory to store instructions and implement functions such as logic, sequencing, timing, counting, and arithmetic to control machines and processes. PLCs are easy to operate and program.

The controller 140 may include a power supply, a CPU, input interfaces, output interfaces, communication interfaces, and memory devices. The power supply may be configured to provide power to the other elements of the controller 140, such as the CPU, input interfaces, output interfaces, communication interfaces, and memory devices, for operation of the controller 140. The memory devices may include read only memory (ROM) configured to store system programs, such as an operating system, and random access memory (RAM) configured to store user programs and data, such as status information of input and output devices, timers, counters, and values of other internal devices. The CPU may be configured to control communication between modules that instantiate logic and convert input signals into output motion signals. The CPU may operate based on system programs and user programs stored in memory devices. The CPU may be configured to write or read inspection data and measurement data to and from data regions of the memory devices based on the system programs and user programs. Conditions or data from industrial devices and production processes may be transmitted to the CPU via an input module. The results processed by the CPU can be sent to the actuator via the output module. The communication interface may be configured to relay data to and from the controller 140 and the processors 130, 150.

However, without limitation, the controller 140 may include any of the following: a simple controller, a complex processor such as a microprocessor, CPU, GPU, or the like, a processor configured by software, and dedicated hardware and firmware. The controller 140 may be instantiated by, for example, a general purpose computer or application specific hardware such as a digital signal processor (DSP), field programmable gate array (FPGA), and application specific integrated circuit (ASIC).

The processor 150 of each of the secondary battery manufacturing facilities 100 may receive the unrecognized image (UIM). Unlike in FIG. 1, the number of data matrix readers 110 included in each of the secondary battery manufacturing facilities 100 may be two or more, and the processor 150 of each of the secondary battery manufacturing facilities 100 may be a data hub of sorts that aggregates the unrecognized images (UIMs) at the facility network level.
The processor 150 of each of the secondary battery manufacturing facilities 100 may be configured to collect cell ID data, including cell IDs (CIDs) and virtual IDs (VIDs). The processor 150 may be configured to transmit the cell ID data to the server 230.

The processor 150 of each of the secondary battery manufacturing facilities 100 may be configured to transmit the unrecognized image (UIM) to a server 210. The server 210 may be configured to store raw data (i.e., images). The server 210 may be, but is not limited to, a network attached storage that stores images such as unrecognized images (UIMs), cell ID-associated images (CIMGs), and virtual ID-associated images (VIMGs).

The server 210 may be configured to send the unrecognized image (UIM) to the processor 220. The processor 220 may be configured to receive the unrecognized image (UIM) from the server 210. The processor 220 may be configured to analyze the unrecognized image (UIM) from the server 210. The processor 220 may be configured to generate classification data (CD) based on the unrecognized image (UIM). The processor 220 may be configured to determine features that prevent the data matrix of the unrecognized image (UIM) from being read. The classification data CD may be indicative of features that interfere with the reading of the unrecognized image (UIM). The classification data CD may include features that interfere with the reading of the unrecognized image (UIM) and a virtual ID (VID) matched to the features. The processor 220 may be configured to transmit the classification data CD to the server 230.

The processor 220 may be configured to determine a virtual ID (VID) matched to the unrecognized image (UIM) from the unrecognized image (UIM), and to retrieve a virtual ID-associated image (VIMG) based on the virtual ID (VID) of the unrecognized image (UIM) from a database of the server 210. The processor 220 may be configured to receive further virtual ID associated images (VIMGs) corresponding to the unrecognized image (UIM) from the server 230.

The processor 220 may be configured to analyze an image (IMG) of the electrode semi-finished product corresponding to the unrecognized image (UIM). The processor 220 may be configured to determine features in the IMG of the electrode semi-finished product that interfere with reading.

The processor 220 may be configured to generate identity verification data (IVD). The identity verification data (IVD) may be indicative of the identity of the classification data (CD), i.e., the identity verification data (IVD) may be indicative of the accuracy of the classification of the unrecognized image (UIM) by the processor. The identity verification data (IVD) may be determined based on features that interfere with reading determined based on the unrecognized image (UIM) and features that interfere with reading determined based on the image of the electrode semi-finished product (IMG). More specifically, the identity verification data (IVD) may indicate a match or mismatch of a reading-inhibiting feature determined based on the unrecognized image (UIM) and a reading-inhibiting feature determined based on the image of the electrode semi-finished product (IMG). The processor 220 may be configured to transmit the identity verification data (IVD) to the server 230.

The server 230 may be configured to receive and store cell ID data transmitted from the processor 150 of each of the secondary battery manufacturing facilities 100. The server 230 may be configured to receive and store categorization data (CD) and identity verification data (IVD) from the processor 220.

Event data representing events that occurred at the secondary battery manufacturing facilities 100 may be matched to cell IDs. Thus, events that occurred in the secondary battery manufacturing process may be matched to electrode semi-finished products, and traceability may be provided to the process of the problematic electrode semi-finished products after shipment.

The servers 210, 230 may include physical servers or cloud servers. The servers 210, 230 may be instantiated as virtual servers, but are not limited thereto. The servers 210, 230 may provide data and analytics results to the operator via various frameworks. The frameworks may include protocols that support data transfer to allow client devices to visualize the data through a user interface and provide updated visualizations as they are computed by the servers 210, 230. The protocols supporting the data transfer may use HTML, JavaScript, and/or JSON.

The servers 210, 230 may include various application programming interfaces (APIs) for storing data in databases and other data management tools. The APIs may also be used to retrieve data from databases in various data management systems. Data management systems can provide access to databases, pull data from databases, retrieve data, and generate metrics. In this context, metrics are tools for visualizing data. Metrics include time-series generated measurements and can be used to monitor applications and generate status alerts.

The server 230 may be configured to send a Uniform Resource Locator (URL) (or, schema) containing source code to a client device for displaying classification data (CD) and identity verification data (IVD) stored in the database in response to an API request from a client or other server. The stored classification data (CD) and identity verification data (IVD) may be visualized using tables and graphs. The client device may access source code for visualizing and displaying the stored classification data (CD) and identity verification data (IVD) via the URL (or, schema).

The processors 130, 150, 220 and servers 210, 230 may be instantiated as hardware, firmware, software, and combinations thereof. For example, the processors 130, 150, 220 and servers 210, 230 may include computing devices such as workstation computers, desktop computers, laptop computers, tablet computers, and the like. The processors 130, 150, 220 and servers 210, 230 may include any one of simple controllers, complex processors such as microprocessors, CPUs, GPUs, etc., processors configured by software, and dedicated hardware and firmware. The processors 130, 150, 220 and servers 210, 230 may be instantiated by, for example, general purpose computers or application specific hardware such as digital signal processors (DSPs), field programmable gate arrays (FPGAs), and application specific integrated circuits (ASICs).

The operations of the processors 130, 150, 220 and servers 210, 230 may be instantiated as instructions stored on a machine-readable medium that can be read and executed by one or more processors. Here, the machine-readable medium may include any mechanism for storing and/or transmitting information in a form readable by a machine (e.g., a computing device). For example, the machine-readable medium may include read only memory (ROM), random access memory (RAM), magnetic disk storage media, optical storage media, flash memory, electrical, optical, acoustic, or other forms of propagated signals (e.g., carrier waves, infrared signals, digital signals, etc.), and any other signals.

The processors 130, 150, 220 and servers 210, 230 may be configured with firmware, software, routines, and instructions for performing any of the foregoing operations, or any of the processes described below. For example, the processors 130, 150, 220 and servers 210, 230 may be instantiated in memory.

The client device can be any device for communicating with the server 300, such as a workstation computer, laptop, notebook, desktop, mobile device such as a tablet, smartphone, and wearable device. The client device may include input tools for inputting API requests and a display device for displaying the status of a cell ID (CID) reading.

The secondary battery manufacturing system 10 may instantiate a plug-in architecture with APIs for data acquisition to provide plug-and-play connectivity of sensors, instruments, and inspectors. Accordingly, resources at a particular process step and at a particular site may be easily transferred to other processes and other sites, or new resources may be easily introduced at each process step and site.

In some embodiments, the secondary battery manufacturing system 10 may further include a manual input system that allows for operator input of manufacturing data. The secondary battery manufacturing system 10 may allow for operator data entry using an input tool and computer-based entry of manufacturing data, such as scraping an excel file. The manual input system may be, for example, a human-machine interface (HMI) of a supervisory control and data acquisition (SCADA) system. SCADA can typically include a combination of software and hardware, such as PLCs and Remote Terminal Units (RTUs). HMIs are screens that enable communication between operators and the SCADA system and are the primary element of a SCADA system. Manual input by the HMI can include, for example, selecting a defect type and reflecting performance upon completion.

### (Second embodiment 2: Method)

FIG. 10 is a flowchart to illustrate a secondary battery manufacturing method according to exemplary embodiments.

Referring to FIGS. 1 and 10, an unrecognized image (UIM) may be received at P110. The unrecognized image (UIM) may be received by the processor 220.

Next, at P120, the classification data (CD) can be generated. The processor 220 may generate the classification data CD based on the unrecognized image (UIM). Generating the classification data CD may include determining features that interfere with the reading of the data matrix included in the unrecognized image (UIM). The classification data CD may be transmitted to the server 230 by to the processor 220.

Next, at P150, an image of the electrode semi-finished product (IMG) corresponding to the unrecognized image (UIM) may be received. The image of the electrode semi-finished product (IMG) may be received by the processor 220. The processor 220 may retrieve a virtual ID-associated image (VIMG) of the electrode semi-finished product based on the virtual ID (VID) matched to the unrecognized image (UIMG), and may receive the virtual ID-associated image (VIMG) corresponding to the unrecognized image (UIMG).

Subsequently, at P140, the identity verification data (IVD) may be generated. The identity verification data (IVD) may be generated by the processor 220. Generating the IVD may include comparing features contained in the unrecognized image (UIM) (i.e., features that interfere with the reading of the data matrix) with features contained in an image of the electrode semi-finished product (IMG) corresponding to the unrecognized image (UIM) (i.e., features that interfere with the reading of the data matrix).

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A secondary battery manufacturing system comprising:
a data matrix reader configured to read a data matrix of an electrode semi-finished product, configured to generate an unrecognized image comprising the data matrix that fails to be read, and configured to match the unrecognized image with a virtual ID;
a first server configured to store the unrecognized images transmitted from the data matrix reader; and
a processor configured to determine features that interfere with the reading of the data matrix to generate classification data based on the unrecognized image transmitted from the first server.

2. The secondary battery manufacturing system of claim 1, wherein
the title of the unrecognized image comprises the virtual ID.

3. The secondary battery manufacturing system of claim 1, wherein
the first server is a Network Attached Storage.

4. The secondary battery manufacturing system of claim 1, wherein
the first server is configured to further store an image associated with the virtual ID, which is an image of the electrode semi-finished product matched to the virtual ID.

5. The secondary battery manufacturing system of claim 4, wherein
the title of the image associated with the virtual ID comprises the virtual ID.

6. The secondary battery manufacturing system of claim 4, wherein
the processor is configured to retrieve the virtual ID-associated image of the electrode semi-finished product to which it corresponds based on the virtual ID matched to the unrecognized image.

7. The secondary battery manufacturing system of claim 4, wherein
the processor is configured to determine features based on the virtual ID-associated image.

8. The secondary battery manufacturing system of claim 7, wherein
the processor is configured to generate identity verification data indicative of identity of the classification data.

9. The secondary battery manufacturing system of claim 8, wherein
the identity verification data is generated by comparing features of the unrecognized image with features of the virtual ID-associated image of the electrode semi-finished product corresponding to the unrecognized image.

10. The secondary battery manufacturing system of claim 9, further comprising:
a second server configured to store the classification data.

11. The secondary battery manufacturing system of claim 10, wherein
the data matrix reader is configured to read a cell ID of the electrode semi-finished product from the data matrix, and
the second server is configured to store cell ID data comprising the cell ID and the virtual ID.

12. The secondary battery manufacturing system of claim 10, wherein
the processor is configured to transmit the identity verification data to the second server.
